# EUROPEAN PATENT APPLICATION

(11) **EP 3 816 052 A1**
(43) Date of publication of application: **05.05.2021**
(21) Application number: 18924264.7
(22) Date of filing: 06.07.2018
(51) Int. Cl.: B64D 47/08, B64C 1/30

(54) **UNMANNED AERIAL VEHICLE AND BODY THEREOF AND PAN-TILT-ZOOM CAMERA**

(30) Priority: 26.06.2018 CN 201820992398 U
(71) Applicant: SZ DJI Technology Co., Ltd., Shenzhen, Guangdong 518057 (CN)
(72) Inventor: XIONG, Rongming, Shenzhen, Guangdong 518057 (CN); XU, Zhenhua, Shenzhen, Guangdong 518057 (CN); XIONG, Xianwu, Shenzhen, Guangdong 518057 (CN); TANG, Yin, Shenzhen, Guangdong 518057 (CN)
(74) Representative: Goddar, Heinz J.
(86) International application number: PCT/CN2018/094872
(87) International publication number: WO 2020/000507

(57) **Abstract**

An unmanned aerial vehicle (UAV) and body thereof, and a gimbal camera. The UAV includes a body (100) that includes a housing (110) provided with an inwardly recessed mounting groove (111) with a notch on one side, and a protective cover (130) arranged at the housing (110) and configured to open and cover the notch, and a gimbal camera (200) including a mounting frame (210) arranged in the mounting groove (111) and detachably connected to the housing (110), a gimbal (230) arranged at the mounting frame (210), and a camera (220) arranged at the gimbal (230). Because the housing is provided with the mounting groove, the size of the UAV having the detachable gimbal can be reduced.

## Description

### CROSS-REFERENCE TO RELATED APPLICATION

This application claims a priority to Chinese patent application No. 201820992398.5, filed on June 26, 2018 and titled "unmanned aerial vehicle and body thereof and gimbal camera," the entire content of which is incorporated herein by reference.

### TECHNICAL FIELD

The present disclosure relates to unmanned aerial vehicle (UAV) technology.

### BACKGROUND

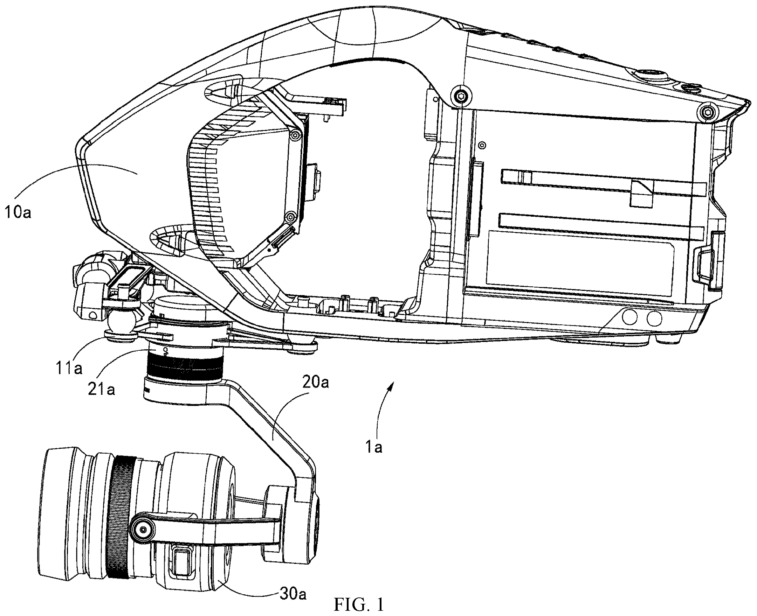

As shown in FIG. 1, a conventional unmanned aerial vehicle (UAV) 1a includes a body 10a, a gimbal 20a, and a camera 30a. The gimbal 20a is mounted at the body 10a, and the camera 30a is mounted at the gimbal 30a. The gimbal 30a can change a shooting direction of the camera 30a.

The gimbal 20a of the UAV 1a can be detachably replaced. Specifically, the UAV 1a is provided with a gimbal mounting groove 11a, and the gimbal 3a is provided with a gimbal buckle 21a cooperating with the gimbal mounting groove 11a. The gimbal buckle 21a is clamped in the gimbal mounting groove 11a to realize mutual fixing of the gimbal 3a and the UAV1a.

However, in order to facilitate a user to perform disassembly and assembly operations of the gimbal 3a, a space for a user to disassemble and assemble the gimbal 3a needs to be reserved. Therefore, the gimbal mounting groove 11a completely protrudes from the body and has an avoidance area around it, thereby causing an increase in a thickness and volume of the entire body.

The information disclosed in the background section is merely for enhancing understanding of the background of the present disclosure, and thus, it may include information that does not constitute prior art known to those of ordinary skill in the art.

### SUMMARY

A series of simplified concepts are introduced in the summary section, which will be explained in detail in the embodiment section. The content of the present disclosure is not intended to limit the key features and necessary technical features of the technical solution that is claimed, and also not intended to determine the protection scope of the technical solution that is claimed.

A technical problem to be solved by the present disclosure is how to reduce a size of an unmanned aerial vehicle (UAV) with a removable gimbal.

A main purpose of the present disclosure is to overcome at least one of the drawbacks of the conventional technologies described above and provide a UAV including a body that includes a housing provided with an inwardly recessed mounting groove with a notch on one side, and a protective cover arranged at the housing and configured to open and cover the notch, and a gimbal camera including a mounting frame arranged in the mounting groove and detachably connected to the housing, a gimbal arranged at the mounting frame, and a camera arranged at the gimbal. When the gimbal camera and the housing are connected via the mounting frame, the gimbal camera can be at least partially accommodated in the notch.

According to an embodiment of the present disclosure, one end of the protective cover is hinged to the housing.

According to an embodiment of the present disclosure, the protective cover includes a horizontal plate, two vertical plates respectively protruding from opposite ends of the horizontal plate to a same side, and two pivots aligned and protruding toward each other from the two vertical plates.

The housing is provided with two shaft holes for accommodating the two pivots respectively.

According to an embodiment of the present disclosure, the protective cover further includes claws respectively arranged at the two vertical plates.

On each vertical plate, the pivot is provided at one end of the vertical plate, and the claw is provided at another end of the vertical plate and extends toward the pivot.

The housing further includes a clamping platform extending from two side walls of the notch toward the protective cover, and the clamping platform is provided with a clamping slot extending from an end of the clamping platform distal from the shaft hole toward the shaft hole.

The shaft hole includes a first strip portion having an extension direction same as an extension direction of the clamping slot, and the two claws can be inserted into the two clamping slots respectively.

According to an embodiment of the present disclosure, the shaft hole further includes a second strip portion extending from an end of the first strip portion close to the clamping platform in a direction away from the notch.

According to an embodiment of the present disclosure, the housing is connected to the mounting frame by screws.

According to an embodiment of the present disclosure, the gimbal camera further includes a first circuit board mounted at the mounting frame.

The UAV further includes a second circuit board arranged in the housing and a flat cable, two ends of which are electrically connected to the first circuit board and the second circuit board, respectively. The flat cable is detachably connected to the first circuit board and/or detachably connected to the second circuit board.

According to an embodiment of the present disclosure, the housing includes an upper housing.

The upper housing includes a body portion having a cylindrical shape and a nose portion arranged at a front end of the body portion.

The mounting groove extends from the front end of the body portion to a bottom end of the nose portion. The mounting frame extends along the mounting groove, and the mounting frame is detachably connected to the nose portion and the body portion.

According to an embodiment of the present disclosure, the second circuit board is arranged in the body portion.

According to an embodiment of the present disclosure, the camera is arranged outside the mounting groove.

The gimbal is configured to change a shooting direction of the camera.

According to an embodiment of the present disclosure, the housing includes the body portion having a cylindrical shape and a nose portion arranged at the front end of the body portion.

The nose portion includes a nose body provided with an opening and an end cover provided at the opening and detachably connected to the nose body.

The gimbal camera further includes a first circuit board mounted at the mounting frame.

The UAV further includes the second circuit board arranged in the nose body and a flat cable, two ends of which are electrically connected to the first circuit board and the third circuit board, respectively. The flat cable is detachably connected to the first circuit board and/or detachably connected to the third circuit board.

According to the technical solutions described above, advantages and positive effects of the UAV consistent with the present disclosure are that when the mounting frame of the gimbal camera is mounted in the mounting groove and the protective cover covers the notch, the mounting frame can be embedded inside the body, and the whole UAV can be more compact. When the gimbal camera is replaced from the UAV, it is only needed to remove the protective cover from the notch in the mounting groove to expose the notch. After the notch is exposed, the notch of the mounting groove and an opening at a top of the mounting groove form an operating space for removing the mounting frame, such that the mounting frame of the gimbal camera can be easily removed from the housing.

The present disclosure further provides a UAV body including the housing provided with the inwardly recessed mounting groove with the notch on one side and the protective cover arranged at the housing and configured to open and cover the notch. The mounting groove is configured to cause an external device detachably connected to the housing, such that the external device is at least partially accommodated in the notch. A recess is formed at a front side or a lower side of the body.

According to an embodiment of the present disclosure, the external device is the gimbal camera.

According to an embodiment of the present disclosure, the gimbal camera includes the mounting frame detachably connected to the housing via the mounting groove, the gimbal arranged at the mounting frame, and the camera arranged at the gimbal.

According to an embodiment of the present disclosure, one end of the protective cover is hinged to the housing.

According to an embodiment of the present disclosure, the protective cover includes the horizontal plate, the two vertical plates respectively protruding from opposite ends of the horizontal plate to a same side, and the two pivots aligned and protruding toward each other from the two vertical plates.

The housing is provided with the two shaft holes for accommodating the two pivots respectively.

According to an embodiment of the present disclosure, the protective cover further includes the claws respectively arranged at the two vertical plates.

On each vertical plate, the pivot is provided at one end of the vertical plate, and the claw is provided at another end of the vertical plate and extends toward the pivot.

The housing further includes the clamping platform extending from two side walls of the notch toward the protective cover, and the clamping platform is provided with the clamping slot extending from the end of the clamping platform away from the shaft hole to the direction of the shaft hole.

The shaft hole includes the first strip portion having the extension direction same as the extension direction of the clamping slot, and the two claws can be inserted into the two clamping slots respectively.

According to an embodiment of the present disclosure, the shaft hole further includes the second strip portion extending from the end of the first strip portion close to the clamping platform in the direction away from the notch.

According to an embodiment of the present disclosure, the housing is connected with the mounting frame by the screws.

According to an embodiment of the present disclosure, the body of the UAV further includes the second circuit board arranged in the housing and the flat cable electrically connected to the second circuit board at one end.

The flat cable is detachably connected to the second circuit board and configured to be electrically and detachably connected to the first circuit board at the mounting frame.

According to an embodiment of the present disclosure, the housing includes an upper housing.

The upper housing includes the body portion having a cylindrical shape and the nose portion arranged at the front end of the body portion.

The mounting groove extends from the front end of the body portion to the bottom end of the nose portion.

According to an embodiment of the present disclosure, the second circuit board is arranged in the body portion.

According to an embodiment of the present disclosure, the housing includes the body portion having a cylindrical shape and the nose portion arranged at the front end of the body portion.

The nose portion includes the nose body provided with the opening and the end cover provided at the opening and detachably connected to the nose body.

The body of the UAV further includes the third circuit board arranged in the nose body and a flat cable electrically connected to the third circuit board at one end.

The flat cable is detachably connected to the third circuit board and is configured to be electrically and detachably connected to the first circuit board at the mounting frame.

The body of the UAV adopting this structure can be compact and can better accommodate the replaceable gimbal camera.

The present disclosure further provides the gimbal camera of the UAV. The UAV includes the body. The gimbal camera includes the mounting frame detachably mounted in the mounting groove of the body, the first circuit board mounted at the mounting frame and for connecting to a circuit board on the body of the UAV via a flat cable, the gimbal arranged at the mounting frame, and the camera arranged at the gimbal. When the gimbal camera is mounted in the mounting groove of the body, the gimbal camera is located on the front side or the lower side of the body.

According to an embodiment of the present disclosure, one side of the mounting groove is provided with the notch that can be opened and covered. When the gimbal camera is connected to the body, the gimbal camera is at least partially accommodated in the notch.

According to an embodiment of the present disclosure, the first circuit board is electrically connected to the second circuit board of the body via the flat cable.

The flat cable is detachably connected to the first circuit board and/or detachably connected to the second circuit board.

The second circuit board is arranged in the housing of the body.

According to an embodiment of the present disclosure, the first circuit board is electrically connected to the third circuit board of the body via the flat cable.

The flat cable is detachably connected to the first circuit board and/or detachably connected to the third circuit board.

The third circuit board is arranged in the nose portion of the body.

The body of the UAV adopting this structure can be compact and can better accommodate the replaceable gimbal camera.

### BRIEF DESCRIPTION OF THE DRAWINGS

Through considering the following detailed description of the preferred embodiments of the present disclosure in conjunction with the accompanying drawings, various purposes, features, and advantages of the present disclosure will become more apparent. The drawings are merely exemplary illustrations of the present disclosure and are not necessarily drawn to scale. The same reference numbers will be used throughout the drawings to refer to the same or like parts.
FIG. 1 is a perspective view of a conventional unmanned aerial vehicle (UAV).
FIG. 2 is a perspective view of a UAV with a protective cover in a closed state according to an exemplary embodiment.
FIG. 3 is a perspective view of a UAV with a protective cover in an open state according to an exemplary embodiment.
FIG. 4 is a disassembly diagram of a UAV according to an exemplary embodiment.
FIG. 5 is a cross-sectional view of a UAV according to an exemplary embodiment.
FIG. 6 is a perspective view showing an assembly of a bottom case and a protective cover according to an exemplary embodiment.
FIG. 7 is a partial enlarged view of a shaft hole in FIG. 6.
FIG. 8 is a perspective view showing an assembly of a bottom case and a protective cover according to an exemplary embodiment.

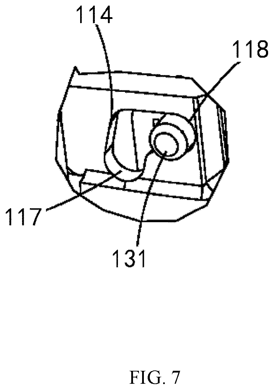

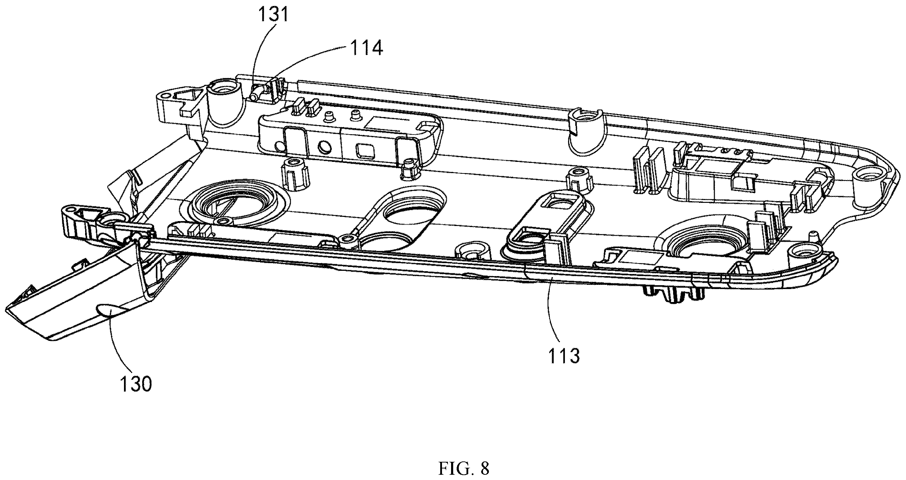

FIG. 7 is a partial enlarged view of a shaft hole in FIG. 8.

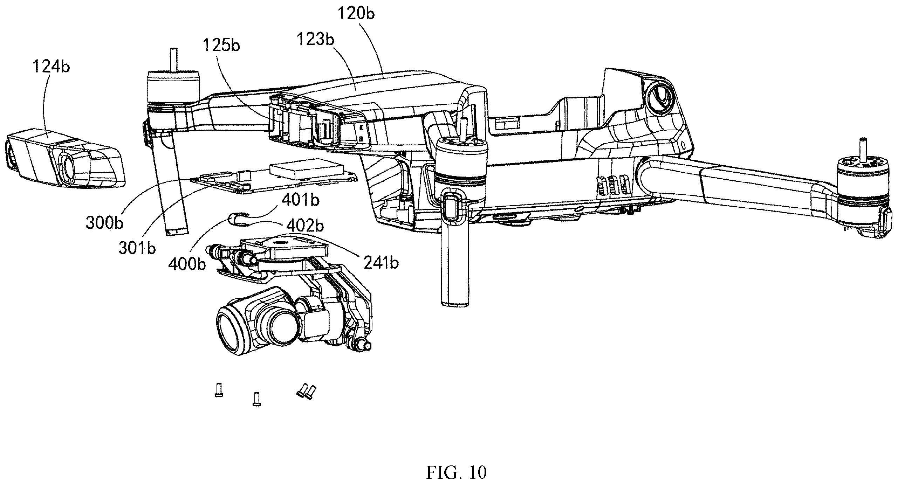

FIG. 10 is a disassembly diagram of a UAV according to an exemplary embodiment.

**Description of Reference Numerals**

| | | | | | |
|---|---|---|---|---|---|
| 1 | UAV | 100 | Body | 110 | Housing |
| 111 | Mounting groove | 113 | Bottom case | 114 | Shaft hole |
| 110 | Housing | 117 | Second strip portion | 118 | First strip portion |
| 121 | Clamping platform | 122 | Body portion | 123 | Nose portion |
| 130 | Protective cover | 131 | Pivot | 132 | Claw |
| 133 | Vertical plate | 134 | Horizontal plate | 200 | Gimbal camera |
| 210 | Mounting frame | 211 | Mounting base | 215 | First support arm |
| 214 | Second support arm | 232 | Third support arm | 214 | Fourth support arm |
| 220 | Camera | 230 | Gimbal | 233 | First rotation arm |
| 236 | Second rotation arm | 240 | First circuit board | 250 | Fastener |
| 300 | Second circuit board | 400 | Flat cable | 401 | First plug |
| 402 | Second plug | 120b | Nose portion | 123b | Nose body |
| 124b | End cover | 125b | Inner cavity | 300b | Third circuit board |
| 301b | Third socket | 400b | Flat cable | 401b | First plug |
| 402b | Second plug | | | | |

### DETAILED DESCRIPTION OF THE EMBODIMENTS

Example embodiments will be described with reference to the accompanying drawings. However, the example embodiments can be implemented in various forms, and should not be considered as being limited to the embodiments described herein. On the contrary, the embodiments are provided such that the disclosure can be comprehensive and complete, and the concept of example embodiments can be fully conveyed to those skilled in the art. The same reference numbers will be used throughout the drawings to refer to the same or like parts, and thus detailed description thereof will be omitted.

### First embodiment

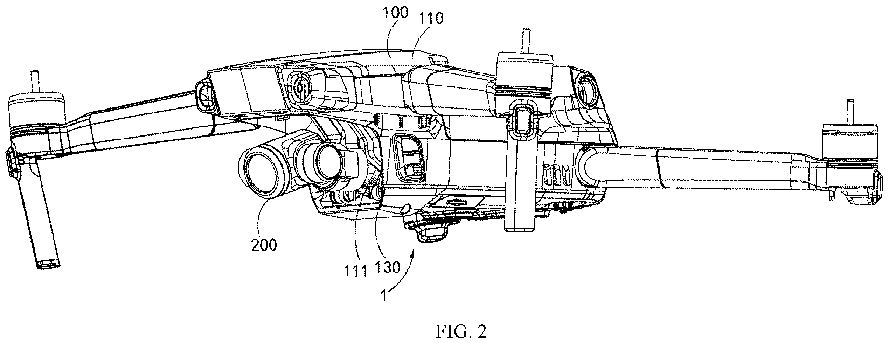

As shown in FIG. 2, FIG. 2 shows an unmanned aerial vehicle (UAV) 1 in this embodiment. The UAV 1 includes a body 100 and a gimbal camera 200. The gimbal camera 200 is mounted at the body 100. The body 100 may be a plastic housing 110.

The body 100 includes the housing 110 and a protective cover 130. The housing 110 is provided with a mounting groove 111 recessed inwardly. A notch is provided at one side of the mounting groove 111. In this embodiment, three sides of the mounting groove 111 are provided with side walls, and the three side walls enclose the mounting groove 111, and a side without the side wall is the notch of the mounting groove 111. The protective cover 130 is provided at the housing 110. The protective cover 130 may be hinged to the housing 110. The protective cover 130 may be detachably connected to the housing 110. The protective cover 130 can open and cover the notch.

The gimbal camera 200 includes a mounting frame 210, a camera 220, and a gimbal 230. The mounting frame 210 is detachably connected to the housing 110. The mounting frame 210 is mounted in the mounting groove 111 of the housing 110. The mounting frame 210 and the housing 110 may be connected by a screw. The gimbal 230 is mounted at the mounting frame 210, and the camera 220 is mounted at the gimbal 230. Both the gimbal 230 and the camera 220 are rotatably connected to the gimbal 230. The gimbal 230 is configured to change a shooting direction of the camera 220.

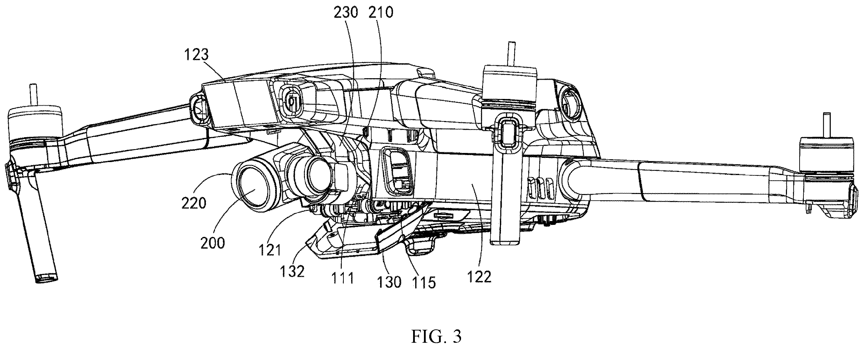

As shown in FIG. 3, when the mounting frame 210 of the gimbal camera 200 is mounted in the mounting groove 111 and the protective cover 130 covers the notch, the mounting frame 210 is embedded in the body 100, such that the entire UAV can be more compact. When the gimbal camera 200 is replaced from the UAV, it is only needed to remove the protective cover 130 from the notch of the mounting groove 111 to expose the notch. After the notch is exposed, the notch of the mounting groove 111 and an opening at a top of the mounting groove 111 can form an operation space for removing the mounting frame 210, such that the mounting frame 210 of the gimbal camera 200 can be easily removed from the housing 110. For example, when the mounting frame 210 and the housing 110 are screwed together, a screwdriver can be used to unscrew the screws, and then the mounting frame 210 can be removed from the space between the notch and the opening at the top of the mounting groove 111.

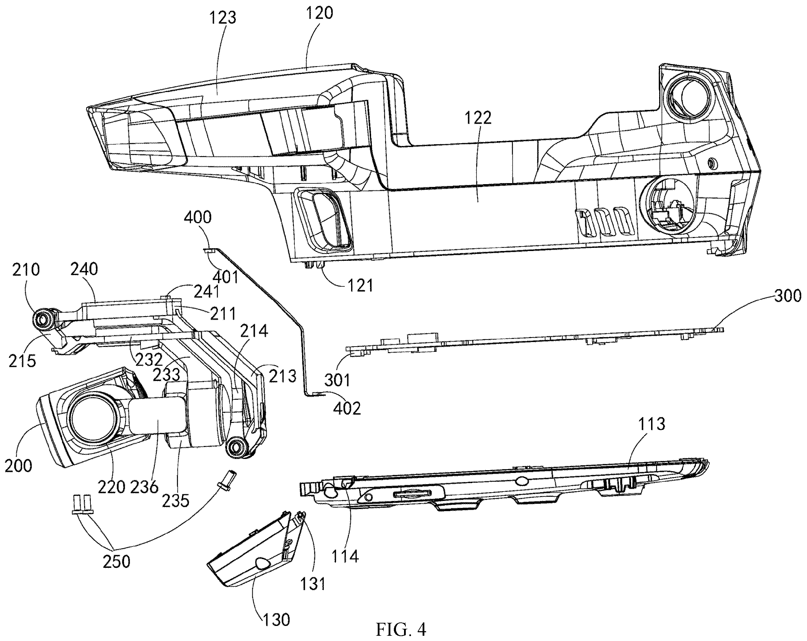

For example, as shown in FIG. 4, the housing 110 includes an upper case 120 and a bottom case 113. The upper case 120 includes a body portion 122 and a nose portion 123. Both the body portion 122 and the nose portion 123 can be the thin housing 110. The body portion 122 can have a long cylindrical shape arranged substantially horizontally. One end of the body portion 122 is a front end, and another end is a rear end. The nose portion 123 is connected to the body portion 122. The nose portion 123 is arranged at a front end of the body portion 122. Both the nose portion 123 and the body portion 122 are provided with inner cavities. The inner cavity of the nose portion 123 and the inner cavity of the body portion 122 communicate with each other. The mounting groove 111 extends from the front end of the body portion 122 to a bottom end of the nose portion 123.

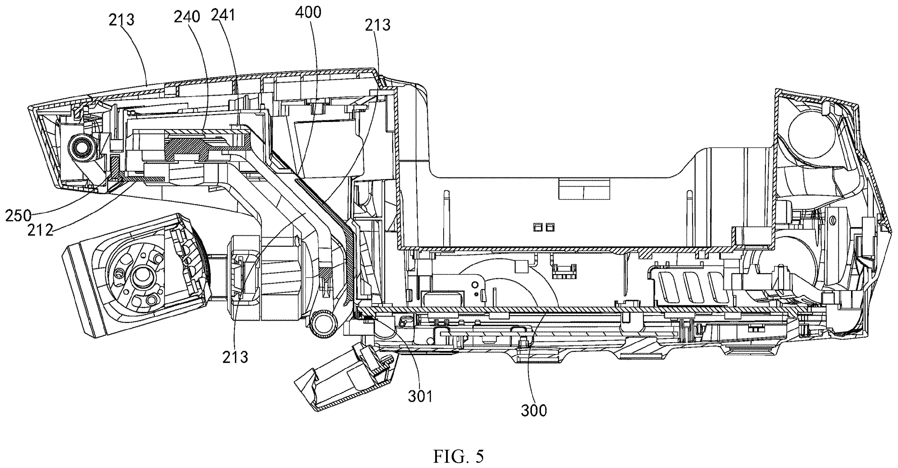

As shown in FIG. 5, an overall structure of the mounting frame 210 is configured to be a substantially elongated structure, and the mounting frame 210 extends along the mounting groove 111. The UAV further includes a plurality of fasteners 250. The fastener can be a screw. The fastener 250 connects the mounting frame 210 and the housing 110 together. Preferably, some fasteners 250 connect the mounting frame 210 and the nose portion 123 together, and other fasteners 250 connect the mounting frame and the body portion 122 together. This kind of installation can be more stable.

A bottom opening is provided under the body portion 122. The bottom opening communicates with the inner cavity of the body portion 122. The bottom case 113 has a substantially plate shape. The bottom case 113 covers the bottom opening. The bottom case 113 and the body portion 122 are detachably connected, for example, a snap connection or a screw connection.

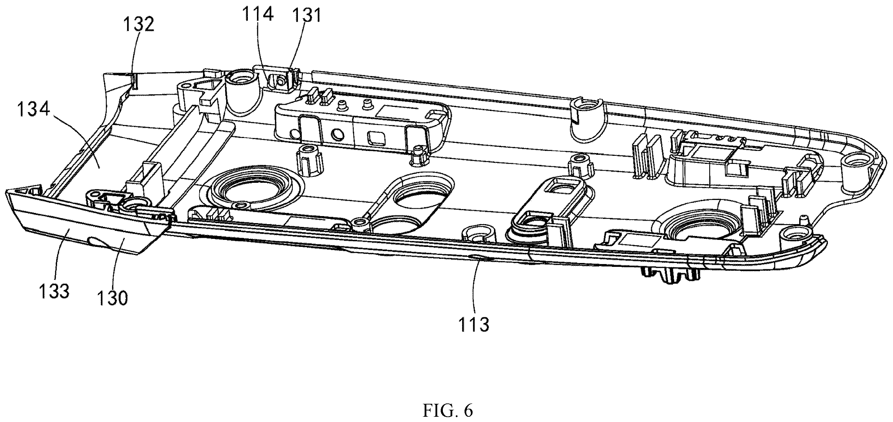

For example, as shown in FIG. 6, an end of the bottom case 113 facing the same direction as the front end of the body portion 122 is the front end. The front end of the bottom case 113 is provided with two shaft holes 114. The two shaft holes 114 are respectively provided at two sides of the bottom case 113. The two shaft holes 114 are aligned with each other.

The protective cover 130 is arranged at the front end of the bottom case 113. The protective cover 130 includes a horizontal plate 134, two vertical plates 133, and two pivots 131. The two vertical plates 133 are arranged vertically. The horizontal plate 134 is arranged horizontally. Two vertical plates 133 extend from opposite ends of the horizontal plate 134 respectively. The two vertical plates 133 extend toward the same side of the horizontal board 134, for example, both extend upward. An edge of the vertical plate 133 is aligned with an edge of the horizontal plate 134. The two pivots 131 are respectively arranged at the two vertical plates 133 and located between the two vertical plates 133. The two pivots 131 extend toward each other from the two vertical plates 133. The two pivots 131 are aligned with each other. The pivot 131 has a cylindrical shape. The two shaft holes 114 of the bottom case 113 are located between the two vertical plates 133 of the protective cover 130. The two pivots 131 are inserted into the two shaft holes 114 respectively. As such, the protective cover 130 is pivotally connected to the bottom case 113. When the notch needs to be opened, it can be achieved by turning the protective cover 130 downward. The protective cover 130 is pivotally connected to the bottom case 113 and is not easy to lose.

For example, as shown in FIG. 6, the protective cover 130 further includes two claws 132. The two claws 132 are respectively arranged at the two vertical plates 133. On each vertical plate 133, the pivot 131 is provided at one end of the vertical plate 133, and the claw 132 is provided at another end of the vertical plate 133. The claw 132 may have a bar shape. The claw 132 extends in a direction toward the pivot 131.

Two clamping platform 121 are further provided at the housing 110. The clamping platform 121 is provided at the body portion of the housing 110. The clamping platform 121 is arranged at two side walls of the notch. The clamping platform 121 extends toward the protective cover 130. Each clamping platform 121 is provided with a clamping slot. The clamping slot can extend in the horizontal direction. In this embodiment, the clamping slot extends from an end of the clamping platform 121 distal from the shaft hole 114 toward the shaft hole 114. For example, a width of the clamping slot gradually narrows along the extension direction.

As shown in FIG. 7, the shaft hole 114 includes a first strip portion 118. An extension direction of the first strip portion 118 is the same as the extension direction of the clamping slot on the clamping platform 121. The two claws 132 can be inserted into the two clamping slots respectively.

FIG. 7 shows a partial enlarged view of the shaft hole 114 when the protective cover 130 is in a closed state. In this state, the two claws 132 are inserted into the two clamping slots, and the pivot 131 is located in the first strip portion 118 and at an end of the first strip portion 118 distal from the clamping platform 121. The claw 132 is clamped in the slot, and the protective cover 130 is locked. When the protective cover 130 needs to be opened, it is only needed to pull the claw 132 out of the slot along the extension direction of the slot, such that the pivot 131 is located at the end of the first strip 118 close to the clamping platform 121, and then turn over the protective cover.

For example, the shaft hole 114 further includes a second strip portion 117. The second strip portion 117 is connected to the end of the first strip portion 118 close to the clamping platform 121. The second strip portion 117 extends from the end of the first strip portion 118 close to the clamping platform 121 in a direction away from the notch. In FIG. 7, the second strip portion 117 extends downward.

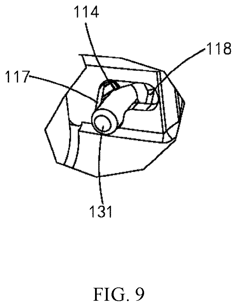

As shown in FIGs. 8 and 9, during a process of opening the protective cover 130, the pivot 131 is also moved to a lowest end of the second strip portion 117, and then the protective cover 130 is turned over. During a turning process, a degree of interference between the protective cover 130 and the bottom case 113 is smaller, and a turning angle of the protective cover 130 can be greater, thereby causing the disassemble and assemble of the gimbal camera 200 to be much easier.

For example, the gimbal camera 200 further includes a first circuit board 240. The first circuit board 240 is arranged at the mounting frame 210. The first circuit board 240 is provided with functional modules of the gimbal camera 200. A first socket 241 is further provided at the first circuit board 240.

The UAV further includes a second circuit board 300 and a flat cable 400. The second circuit board 300 is provided with multiple functional modules of the UAV, such as a communication module and the like. The second circuit board 300 is arranged in the housing 110, specifically in the inner cavity of the body portion 122. The second circuit board 300 can be removed from the bottom case 113. A second socket 301 is further provided at the second circuit board 300. The flat cable 400 is provided with a first plug 401 and a second plug 402. The first plug 401 is plugged into the first socket 241, and the second plug 402 is plugged into the second socket 301. The flat cable 400 electrically connects the first circuit board 240 and the second circuit board 300 to each other.

When the gimbal camera 200 needs to be removed, it is only needed to separate the first plug 401 from the first socket 241 and/or the second socket 301 from the second socket 301, such that the circuits on the first circuit board 240 and the second circuit board 300 can be separated from each other. The flat cable 400 may be an FPC flat cable 400. For example, the flat cable 400 extends along the mounting frame 210.

For example, the mounting frame 210 includes a mounting base 211, a first support arm 215, a second support arm 214, a third support arm 232 and a fourth support arm 213. The mounting base 211 has a frame structure. The first support arm 215 and the second support arm 214 are respectively arranged at opposite ends of the mounting base 211. Both the first support arm 215 and the second support arm 214 extend diagonally downward. The first support arm 215 is shorter than the second support arm 214. The third supporting arm 232 extends horizontally from an end of the first supporting arm 215 distal from the mounting base 211 toward the second supporting arm 214. A top end of the third support arm 232 extends through the second support arm 214. Two ends of the fourth support arm 213 are respectively connected to an end of the third support arm 232 distal from the first support arm 215 and an end of the second support arm 214 distal from the mounting base 211. The third support arm 232 is detachably connected to the nose portion 123, and the four support arms are detachably connected to the body portion 122. The first circuit board 240 is arranged at the mounting base 211. The first circuit board 240 is preferably arranged at a top of the mounting base 211. A bottom of the mounting base 211 is connected to the gimbal 230. As such, the mounting frame 210 can be more stable and lighter, and can leave enough space for the gimbal 230 to move.

For example, the gimbal 230 includes a first rotation arm 233 and a second rotation arm 236. The first rotation arm 233 is inclined. One end of the first rotation arm 233 is rotatably connected to the mounting base 211, and another end is rotatably connected to the second rotation arm 236. A rotating axis of the first rotation arm 233 on the mounting base 211 is vertically arranged, and a rotating axis of the second rotation arm 236 on the first rotation arm 233 is arranged horizontally. An end of the second rotation arm 236 distal from the first rotation arm 233 is rotatably connected to the camera 220. A rotation axis of the camera 220 on the first rotation arm 233 is horizontal and perpendicular to a rotation axis of the second rotation arm 236 on the first rotation arm 233. As such, the gimbal can adjust the camera 220 to shoot in all directions.

### Second embodiment

As shown in FIG. 10, compared with the UAV 1 in the first embodiment, the UAV in the second embodiment has a different nose structure and cable connection. In addition, the UAV in the second embodiment further includes a third circuit board 300b. The similarities between the two will not repeated herein.

In this embodiment, a nose portion 120b includes a nose body 123b and an end cover 124b. A front end of the nose body 123b is open. The end cover 124b is connected to the nose body 123b. The end cover 124b covers an opening of the nose body 123b. The end cover 124b and the nose body 123b have a detachable connection therebetween, which may be a snap connection.

The third circuit board 300b is arranged in an inner cavity 125b of the nose body. The third circuit board 300b is provided with a third socket 301b. A first plug 401b and a second plug 402b are respectively provided at both ends of the flat cable 400b. The first plug 401b is plugged into the first socket 241b of the first circuit board 240b, and the second plug 402b is plugged into the third socket 301b. As such, the first circuit board 240b and the third circuit board 300b are electrically connected, and the flat cable 400b has a shorter length.

When the gimbal camera needs to be removed, the end cover 124b is first removed from the nose portion 120b, and then the first plug 401b is separated from the first socket 241b and/or the second socket 301b is separated from the third socket 301b. As such, the circuits on the first circuit board 240 and the third circuit board 300b can be separated from each other. The flat cable 400b may be an FPC cable.

It should be understood that the various examples described above may be utilized in multiple directions (e.g., inclined, inverted, horizontal, vertical, or the like) and in multiple configurations without departing from the principles of the present disclosure. The embodiments shown in the drawings are merely shown and described as examples of effective applications of the principles of the present disclosure, and the present disclosure is not limited to any specific details of these embodiments.

Various modifications, additions, substitutions, deletions, and other changes of the specified embodiments will be apparent to those skilled in the art from consideration of the description of the representative embodiments disclosed herein, which are intended to be encompassed within the scope of the present disclosure. It can be appreciated that the detailed description be considered as illustration and example, and the spirit and scope of the present disclosure are only limited by the appended claims and their equivalents.

## Claims

1. An unmanned aerial vehicle (UAV), wherein, comprising:
a body (100) including:
a housing (110) provided with an inwardly recessed mounting groove (111) with a notch on one side; and
a protective cover (130) arranged at the housing (110) and configured to open and cover the notch; and
a gimbal camera (200) including a mounting frame (210) detachably connected to the housing (110) via the mounting groove (111), a gimbal (230) arranged at the mounting frame (210), and a camera (220) arranged at the gimbal (230),
wherein when the gimbal camera (200) and the housing (110) are connected via the mounting frame (210), the gimbal camera (200) is at least partially accommodated in the notch.

2. The UAV according to claim 1, wherein one end of the protective cover (130) is hinged to the housing (110).

3. The UAV according to claim 2, wherein the protective cover (130) includes a horizontal plate (134), two vertical plates (133) respectively protruding from opposite ends of the horizontal plate (134) to a same side, and two pivots (131) aligned and protruding toward each other from the two vertical plates (133);
the housing is provided with two shaft holes (114) for accommodating the two pivots (131) respectively.

4. The UAV according to claim 3, wherein the protective cover (130) further includes claws (132) respectively arranged at the two vertical plates (133);
on each vertical plate (133), the pivot (131) is provided at one end of the vertical plate (133), and the claw (132) is provided at another end of the vertical plate (133) and extends toward the pivot (131);
the housing (100) further includes a clamping platform (121) extending from two side walls of the notch toward the protective cover (130), the clamping platform (121) is provided with a clamping slot extending from an end of the clamping platform (121) distal from the shaft hole (114) toward the shaft hole (114);
the shaft hole (114) includes a first strip portion (118) having an extension direction same as an extension direction of the clamping slot; the two claws (132) are inserted into the two clamping slots respectively.

5. The UAV according to claim 4, wherein the shaft hole (114) further includes a second strip portion (117) extending from an end of the first strip portion (118) close to the clamping platform (121) in a direction away from the notch.

6. The UAV according to claim 1, wherein the housing (110) is connected to the mounting frame (210) by screws.

7. The UAV according to any one of claims 1 to 6, wherein the gimbal camera (200) further includes a first circuit board (240) mounted at the mounting frame (210);
the UAV further includes a second circuit board (300) arranged in the housing (110) and a flat cable (400), two ends of which are electrically connected to the first circuit board (240) and the second circuit board (300), respectively,
wherein the flat cable (400) is detachably connected to the first circuit board (240) and/or detachably connected to the second circuit board (300).

8. The UAV according to claim 7, wherein the housing (110) includes an upper housing (120);
the upper housing (120) includes a body portion (122) having a cylindrical shape and a nose portion (123) arranged at a front end of the body portion (122);
wherein, the mounting groove (111) extends from the front end of the body portion (122) to a bottom end of the nose portion (123), the mounting frame (210) extends along the mounting groove (111), the mounting frame (210) is detachably connected to the nose portion (123) and the body portion (122).

9. The UAV according to claim 8, wherein the second circuit board (300) is arranged in the body portion (122).

10. The UAV according to any one of claims 1 to 6, the camera (220) is arranged outside the mounting groove (111);
the gimbal (230) is configured to change a shooting direction of the camera (220).

11. The UAV according to any one of claims 1 to 6, wherein the housing includes the body portion having a cylindrical shape and a nose portion (120b) arranged at the front end of the body portion;
the nose portion includes a nose body (123b) provided with an opening and an end cover (124b) provided at the opening and detachably connected to the nose body (123b);
the gimbal camera further includes a first circuit board (240b) mounted at the mounting frame;
the UAV further includes a third circuit board (300b) arranged in the nose body and a flat cable (400b), two ends of which are electrically connected to the first circuit board (240b) and the third circuit board (300b), respectively;
wherein the flat cable (400b) is detachably connected to the first circuit board (240b) and/or detachably connected to the third circuit board (300b).

12. A body of an unmanned aerial vehicle (UAV), wherein, comprising:
a housing (110) provided with an inwardly recessed mounting groove (111) with a notch on one side; and
a protective cover (130) arranged at the housing (110) and configured to open and cover the notch;
wherein the mounting groove (111) is configured to cause an external device detachably connected to the housing (110), such that the external device is at least partially accommodated in the notch and a recess is formed at a front side or a lower side of the body.

13. The body of the UAV according to claim 12, wherein the external device is a gimbal camera (200).

14. The body of the UAV according to claim 13, wherein the gimbal camera (200) includes:
a mounting frame (210), the mounting frame (210) detachably connected to the housing (110) via the mounting groove (111);
a gimbal (230) arranged at the mounting frame (210); and
a camera (220) arranged at the gimbal (230).

15. The body of the UAV according to claim 12, wherein one end of the protective cover (130) is hinged to the housing (110).

16. The body of the UAV according to claim 15, wherein the protective cover (130) includes a horizontal plate (134), two vertical plates (133) respectively protruding from opposite ends of the horizontal plate (134) to a same side, and two pivots (131) aligned and protruding toward each other from the two vertical plates (133);
the housing is provided with two shaft holes (114) for accommodating the two pivots (131) respectively.

17. The body of the UAV according to claim 16, wherein the protective cover (130) further includes claws (132) respectively arranged at the two vertical plates (133);
on each vertical plate (133), the pivot (131) is provided at one end of the vertical plate (133), and the claw (132) is provided at another end of the vertical plate (133) and extends toward the pivot (131);
the housing (100) further includes a clamping platform (121) extending from two side walls of the notch toward the protective cover (130), the clamping platform (121) is provided with a clamping slot extending from an end of the clamping platform (121) distal from the shaft hole (114) toward the shaft hole (114);
the shaft hole (114) includes a first strip portion (118) having an extension direction same as an extension direction of the clamping slot, the two claws (132) are inserted into the two clamping slots respectively.

18. The body of the UAV according to claim 17, wherein the shaft hole (114) further includes a second strip portion (117) extending from an end of the first strip portion (118) close to the clamping platform (121) in a direction away from the notch.

19. The body of the UAV according to claim 14, wherein the housing (110) is connected to the mounting frame (210) by screws.

20. The body of the UAV according to any one of claims 12 to 19, wherein the body of the UAV further includes a second circuit board (300) arranged in the housing (110) and a flat cable (400) electrically connected to the second circuit board (300) at one end;
wherein the flat cable (400) is detachably connected to the second circuit board (300) and is configured to be electrically and detachably connected to the first circuit board (240) at the mounting frame (210).

21. The body of the UAV according to claim 20, wherein the housing (110) includes an upper housing (120);
the upper housing (120) includes a body portion (122) having a cylindrical shape and a nose portion (123) arranged at a front end of the body portion (122);
wherein, the mounting groove (111) extends from the front end of the body portion (122) to a bottom end of the nose portion (123).

22. The body of the UAV according to claim 21, wherein the second circuit board (300) is arranged in the body portion (122).

23. The body of the UAV according to any one of claims 12 to 19, wherein the housing includes the body portion having a cylindrical shape and a nose portion (120b) arranged at the front end of the body portion;
the nose portion includes a nose body (123b) provided with an opening and an end cover (124b) provided at the opening and detachably connected to the nose body (123b); and
the body of the UAV further includes a third circuit board (300b) arranged in the nose body and a flat cable (400b), one end of which is electrically connected to the third circuit board (300b);
wherein the flat cable is detachably connected to the third circuit board (300b) and is configured to be electrically and detachably connected to the first circuit board (240) at the mounting frame (210).

24. A gimbal camera of an unmanned aerial vehicle (UAV), the UAV including a body (100), wherein, comprising:
a mounting frame (210) detachably mounted in a mounting groove (111) of the body (100);
a first circuit board mounted at the mounting frame (210) and for connecting to a circuit board on the body of the UAV via a flat cable;
a gimbal (230) arranged at the mounting frame (210); and
a camera (220) arranged at the gimbal (230),
wherein when the gimbal camera is mounted in the mounting groove (111) of the body (100), the gimbal camera is located on a front side or a lower side of the body.

25. The gimbal camera according to claim 24, wherein one side of the mounting groove (111) is provided with a notch being opened or covered, wherein when the gimbal camera is connected to the body (100), the gimbal camera is at least partially accommodated in the notch.

26. The gimbal camera according to claim 24, wherein the first circuit board is electrically connected to a second circuit board of the body (100) via a flat cable (400), wherein:
the flat cable (400) is detachably connected to the first circuit board (240) and/or detachably connected to the second circuit board (300); and
the second circuit board (300) is arranged in a housing (110) of the body (100).

27. The gimbal camera according to claim 24, wherein the first circuit board is electrically connected to a third circuit board of the body (100) via a flat cable (400b), wherein:
the flat cable (400) is detachably connected to the first circuit board (240) and/or detachably connected to the third circuit board (300b); and
the third circuit board is arranged in a nose portion (120b) of the body (100).
